# EUROPÄISCHE PATENTSCHRIFT

(11) **EP 2 775 204 B1**
(45) Veröffentlichungstag und Bekanntmachung des Hinweises auf die Patenterteilung: **27.12.2017**
(21) Anmeldenummer: 14157623.1
(22) Anmeldetag: 04.03.2014
(51) Int. Cl.: F23J 13/08, F24B 13/00

(54) **Verschluss**
Closure
Fermeture

(30) Priorität: 05.03.2013 DE 102013102141
(43) Veröffentlichungstag der Anmeldung: 10.09.2014
(73) Patentinhaber: Seibel & Reitz GmbH & Co KG, 35216 Biedenkopf (DE); eka Edelstahlkamine GmbH, 95369 Untersteinbach (DE)
(72) Erfinder: Böhm, Jürgen, 92152 Selbitz (DE)
(74) Vertreter: Wolf, Michael

(56) Entgegenhaltungen:
- EP-A1- 1 248 043
- DE-A1-102010 028 522
- DE-U1- 20 320 323
- DE-U1-202004 007 331

## Beschreibung

Die Erfindung betrifft einen Verschluss gemäß dem Oberbegriff des Patentanspruchs 1.

Ein Verschluss der eingangs genannten Art ist nach der DE 203 20 323 U1 bekannt. Dieser Zugriffs- und Reinigungszwecken dienende Verschluss besteht aus einem Rohrstutzen, der seinerseits an einem Rohr angeordnet ist, und einem zum Rohrstutzen passenden Deckel, wobei der Rohrstutzen an seinem deckelseitigen Ende einen sich radial erweiternden und dabei eine (umgestülpte) Rundung bildenden, ersten Sitzringabschnitt und einen sich in Rohrstutzen-Hauptaxialrichtung erstreckenden und an den ersten anschließenden, zweiten Sitzringabschnitt aufweist, wobei der Deckel eine zum ersten Sitzringabschnitt passende Ringnut und einen sich an die Ringnut anschließenden Randabschnitt aufweist. Wie in Abschnitt [0030] und Figur 5 der DE 203 20 323 U1 erläutert bzw. dargestellt, ist bei dieser Lösung letztlich aus Sicherheitsgründen eine dünne Flachringdichtung in der Ringnut angeordnet.

Der Erfindung liegt die Aufgabe zugrunde, einen Verschluss der eingangs genannten Art zu verbessern. Insbesondere soll ein Verschluss geschaffen werden, der ohne jedes zusätzliche Dichtelement, insbesondere ohne Flachringdichtung, auskommt, aber trotzdem zuverlässig dichtend ausgebildet ist.

Diese Aufgabe ist mit einem Verschluss der eingangs genannten Art durch die im Kennzeichen des Patentanspruchs 1 aufgeführten Merkmale gelöst.

Nach der Erfindung ist also vorgesehen, dass der zweite Sitzringabschnitt und der Randabschnitt eine vollumfängliche Dichtfläche bildend formschlüssig zueinander und sich vom ersten Sitzringabschnitt ausgehend radial erweiternd ausgebildet sind.

Mit anderen Worten zeichnet sich die erfindungsgemäße Lösung dadurch aus, dass die Dichtfläche insgesamt vergrößert und insbesondere nach außen in den Bereich zwischen dem zweiten Sitzringabschnitt und dem Randabschnitt erstreckt ausgebildet ist. Die Abdichtung erfolgt somit nicht mehr nur noch wie beim vorgenannten Stand der Technik im Bereich der Ringnut, sondern insbesondere auch im sich daran anschließenden Bereich des zweiten Sitzringabschnitts, der sich gemeinsam mit dem Randabschnitt vom ersten Sitzringabschnitt ausgehend kontinuierlich erweiternd ausgebildet ist.

Wie Versuche gezeigt haben, kommt die erfindungsgemäße Lösung ohne jedes zusätzliche Dichtelement (zum Beispiel Flachringdichtung) aus, d. h. allein durch die neue Formgebung der Wandungen des Rohrstutzens und des Deckels ist durch die Erfindung ein zuverlässig dichtender, zusatzdichtmittelfreier Verschluss geschaffen.

Andere vorteilhafte Weiterbildungen ergeben sich aus den abhängigen Patentansprüchen.

Der Vollständigkeit halber wird noch auf die thematisch weiter abliegende DE 10 2010 028 522 A1 hingewiesen, die sich jedenfalls insofern vom erfindungsgemäßen Verschluss unterscheidet, als dass bei diesem der Randabschnitt sich vom ersten Sitzringabschnitt ausgehend radial erweiternd ausgebildet sind.

Der erfindungsgemäße Verschluss einschließlich seiner vorteilhaften Weiterbildungen gemäß der abhängigen Patentansprüche wird nachfolgend anhand der zeichnerischen Darstellung zweier Ausführungsbeispiele näher erläutert.

Es zeigt schematisch
- Figur 1: im Schnitt den erfindungsgemäßen Verschluss;
- Figur 2: ebenfalls im Schnitt und vergrößert ein wesentliches Detail des erfindungsgemäßen Verschlusses.

Der in den Figuren dargestellte Verschluss besteht in bekannter Weise aus einem Rohrstutzen 1, der bevorzugt einen kreisförmigen Querschnitt aufweist, und einem zum Rohrstutzen 1 passenden Deckel 2, der ebenfalls vorzugsweise kreisförmig ausgebildet ist. Der Rohrstutzen 1 weist an seinem deckelseitigen Ende einen sich radial erweiternden und dabei eine umgestülpte Rundung bildenden, ersten Sitzringabschnitt 1.1 und einen sich in Rohrstutzen-Hauptaxialrichtung erstreckenden und an den ersten anschließenden, zweiten Sitzringabschnitt 1.2 auf. Ferner weist der Deckel 2 eine zum ersten Sitzringabschnitt 1.1 passende Ringnut 2.1 und einen sich an die Ringnut 2.1 anschließenden Randabschnitt 2.2 auf.

Genau wie bei der vorgenannten Lösung nach DE 203 20 323 U1 ist bei der erfindungsgemäßen Lösung vorgesehen, dass der Rohrstutzen 1 an einem Anschlusselement 3 (insbesondere einem Hauptrohr bzw. Rauchgasabzugsrohr) angeordnet ist, wobei vorzugsweise die Hauptachsen von Rohrstutzen 1 und Anschlusselement 3 senkrecht zueinander angeordnet sind. Weiterhin ist der Deckel 2 mit als Innenverriegelung ausgebildeten Befestigungsmitteln, die vorzugsweise (aber nicht zwingend) wie bei der Lösung nach DE 203 20 323 U1 ausgebildet sind, am Rohrstutzen 2 und/oder an dem Anschlusselement 3, an dem der Rohrstutzen 2 angeordnet ist, fixierbar ausgebildet.

Wesentlich für den erfindungsgemäßen Verschluss ist nun, dass der zweite Sitzringabschnitt 1.2 und der Randabschnitt 2.2 eine vollumfängliche Dichtfläche bildend formschlüssig zueinander und sich vom ersten Sitzringabschnitt 1.1 ausgehend radial erweiternd ausgebildet sind. Diese Maßgabe ermöglicht es, wie eingangs erläutert, dass der Verschluss insgesamt zusatzdichtmittelfrei ausgebildet sein kann.

Weiterhin ist bevorzugt vorgesehen, dass der erste Sitzringabschnitt 1.1 und die Ringnut 2.1 eine vollumfängliche Dichtfläche bildend formschlüssig zueinander ausgebildet sind.

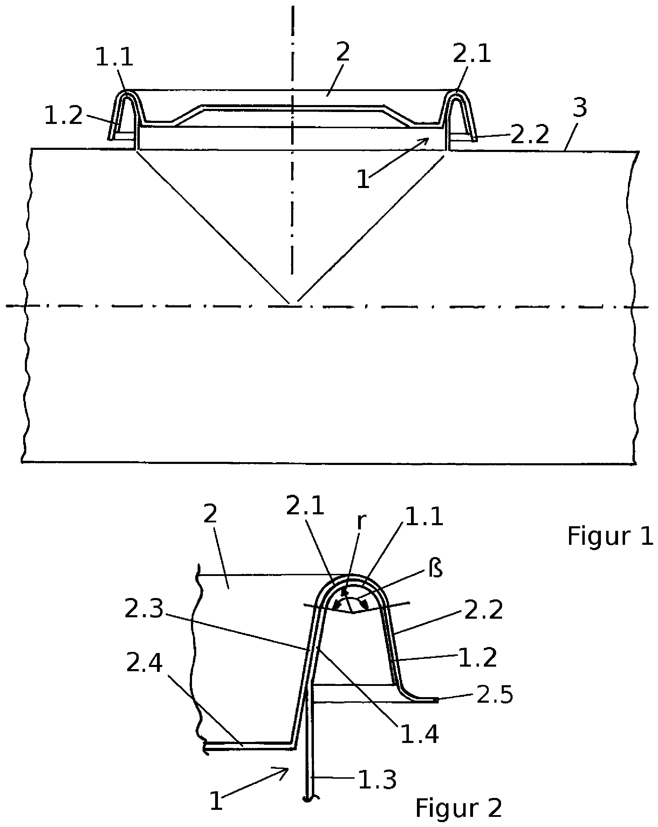

Mit Verweis auf Figur 2 ist ferner vorgesehen, dass sowohl die Rundung des ersten Sitzringabschnittes 1.1 als auch die Ringnut 2.1 entlang eines festen Radius' r geformt ausgebildet sind, d. h. die Rundung des ersten Sitzringabschnittes 1.1 ist mit einem ersten Radius und die Ringnut 2.1 mit einem zweiten Radius ausgeformt, wobei die beiden Radien so gewählt, sind, dass sich die oben genannte vollumfängliche Dichtfläche ergibt, sprich die Ringnut 2.1 ist exakt passend zum ersten Sitzringabschnitt 1.1 ausgebildet.

Ferner ist wiederum mit Verweis auf Figur 2 vorgesehen, dass der besagte Radius r zur Ausbildung der Rundung des ersten Sitzringabschnittes 1.1 bzw. der Ringnut 2.1 einen Winkel β von mehr als 90°, vorzugsweise von mehr als 150°, überstreicht (in Figur 2 beträgt dieser Winkel 160°). Darüber hinaus beträgt der Winkel β stets weniger als 180°.

Um diese Formvorgaben realisieren zu können, ist weiterhin vorgesehen, dass der Rohrstutzen 1 und/oder der Deckel 2 durch Metalldrücken (siehe hierzu zum Beispiel: http://de.wikipe-dia.org/w/index.php?title=Dr%C3%BCcken_%28Umformen%29&oldid= 113512586) hergestellt ausgebildet ist bzw. sind.

Ferner ist bevorzugt vorgesehen, dass der Rohrstutzen 1 im Bereich zwischen einem Anschlusselement 3 (dem Hauptrohr), an dem er deckelabgewandt angeordnet ist, und dem ersten Sitzringabschnitt 1.1 einen zylindrisch ausgebildeten, ersten Teilabschnitt 1.3 aufweist.

Außerdem ist bevorzugt vorgesehen, dass der Rohrstutzen 1 im Bereich zwischen einem Anschlusselement 3 (dem Hauptrohr), an dem er deckelabgewandt angeordnet ist, und dem ersten Sitzringabschnitt 1.1 einen sich in Richtung Sitzringabschnitt 1.1 kontinuierlich erweiternden, zweiten Teilabschnitt 1.4 aufweist.

Dabei sind, wie die Figuren zeigen, der erste Teilabschnitt 1.3, der zweite Teilabschnitt 1.4, der erste Sitzringabschnitt 1.1 und der zweite Sitzringabschnitt 1.2 in dieser Reihenfolge kontinuierlich ineinander übergehend ausgebildet, wobei außerdem das Anschlusselement 3 (das Hauptrohr) mit dem ersten Teilabschnitt 1.3 verbunden ausgebildet ist.

Ferner weist der Deckel 2 bevorzugt einen sich an die Ringnut 2.1 anschließenden, sich in Richtung des ersten Teilabschnitts 1.3 des Rohrstutzens 2 verjüngenden, zusammen mit dem zweiten Teilabschnitt 1.4 des Rohrstutzens 2 eine vollumfängliche Dichtfläche bildenden Innenabschnitt 2.3 auf, wobei ferner besonders bevorzugt vorgesehen ist, dass der Randabschnitt 2.2, die Ringnut 2.1 und der Innenabschnitt 2.3 in dieser Reihenfolge kontinuierlich ineinander übergehend ausgebildet sind. Bezüglich des Randabschnittes 2.2 ist darüber hinaus bevorzugt vorgesehen, dass dieser den zweiten Sitzringabschnitt 1.2 überlappend ausgebildet ist.

Ferner ist vorgesehen, dass an den Innenabschnitt 2.3 ringnutabgewandt eine kreisförmige Deckelfläche 2.4 anschließend ausgebildet ist, wobei die oben genannten Befestigungsmittel bevorzugt an dieser Deckelfläche 2.4 angeordnet sind.

Schließlich ist mit Verweis auf Figur 2 vorgesehen, dass der Randabschnitt 2.2 von der Ringnut 2.1 abgewandt und jenseits der Dichtfläche einen radial frei (nach außen) auskragenden Teilabschnitt 2.5 aufweist. Dieser Teilabschnitt 2.5 hat - abgesehen davon, dass der Deckel 2 aufgrund dieses Teilabschnitts 2.5 insgesamt stabiler wird - mehrere Vorteile: Erstens gewährleistet er, dass mögliche, bei der Produktion entstandene Grate nicht innerhalb der genannten Dichtfläche zwischen dem Randabschnitt 2.2 und dem zweiten Sitzringabschnitt 1.2 verlaufen können; zweitens bildet er (wie insbesondere der Vergleich zur Lösung gemäß Figur 1 zeigt) eine gut zugängliche Angriffsfläche für ein Werkzeug, falls es - zum Beispiel aufgrund von Wärmespannungen - erforderlich sein sollte, den Deckel 2 vom Rohrstutzen 1 zu lösen. Dank des Teilabschnitts 2.5 besteht dabei keine Gefahr, dass die eigentliche Dichtfläche beim Lösung mittels eines Werkzeugs beschädigt wird.

### Bezugszeichenliste

- 1: Rohrstutzen
- 1.1: erster Sitzringabschnitt
- 1.2: zweiter Sitzringabschnitt
- 1.3: erster Teilabschnitt
- 1.4: zweiter Teilabschnitt

- 2: Deckel
- 2.1: Ringnut
- 2.2: Randabschnitt
- 2.3: Innenabschnitt
- 2.4: Deckelfläche
- 2.5: Teilabschnitt

- 3: Anschlusselement

- r: Radius
- β: Winkel

## Patentansprüche

1. Verschluss, umfassend einen Rohrstutzen (1) und einen zum Rohrstutzen (1) passenden Deckel (2), wobei der Rohrstutzen (1) an seinem deckelseitigen Ende einen sich radial erweiternden und dabei eine Rundung bildenden, ersten Sitzringabschnitt (1.1) und einen sich in Rohrstutzen-Hauptaxialrichtung erstreckenden und an den ersten anschließenden, zweiten Sitzringabschnitt (1.2) aufweist, wobei der Deckel (2) eine zum ersten Sitzringabschnitt (1.1) passende Ringnut (2.1) und einen sich an die Ringnut (2.1) anschließenden Randabschnitt (2.2) aufweist, wobei der zweite Sitzringabschnitt (1.2) und der Randabschnitt (2.2) eine vollumfängliche Dichtfläche bildend formschlüssig zueinander ausgebildet sind, und wobei der zweite Sitzringabschnitt (1.2) sich vom ersten Sitzringabschnitt (1.1) ausgehend radial erweiternd ausgebildet ist,
**dadurch gekennzeichnet,**
**dass** der Randabschnitt (2.2) sich vom ersten Sitzringabschnitt (1.1) ausgehend radial erweiternd ausgebildet ist.

2. Verschluss nach Anspruch 1,
**dadurch gekennzeichnet,**
**dass** der Verschluss zusatzdichtmittelfrei ausgebildet ist.

3. Verschluss nach Anspruch 1 oder 2,
**dadurch gekennzeichnet,**
**dass** der erste Sitzringabschnitt (1.1) und die Ringnut (2.1) eine vollumfängliche Dichtfläche bildend formschlüssig zueinander ausgebildet sind.

4. Verschluss nach einem der Ansprüche 1 bis 3,
**dadurch gekennzeichnet,**
**dass** sowohl die Rundung des ersten Sitzringabschnittes (1.1) als auch die Ringnut (2.1) entlang eines festen Radius' (r) geformt ausgebildet sind.

5. Verschluss nach Anspruch 4,
**dadurch gekennzeichnet,**
**dass** der Radius (r) zur Ausbildung der Rundung des ersten Sitzringabschnittes (1.1) bzw. der Ringnut (2.1) einen Winkel (β) von mehr als 90°, vorzugsweise von mehr als 150°, überstreicht.

6. Verschluss nach einem der Ansprüche 1 bis 5,
**dadurch gekennzeichnet,**
**dass** der Rohrstutzen (1) im Bereich zwischen einem Anschlusselement (3), an dem er deckelabgewandt angeordnet ist, und dem ersten Sitzringabschnitt (1.1) einen zylindrisch ausgebildeten, ersten Teilabschnitt (1.3) aufweist.

7. Verschluss nach einem der Ansprüche 1 bis 6,
**dadurch gekennzeichnet,**
**dass** der Rohrstutzen (1) im Bereich zwischen einem Anschlusselement (3), an dem er deckelabgewandt angeordnet ist, und dem ersten Sitzringabschnitt (1.1) einen sich in Richtung Sitzringabschnitt (1.1) kontinuierlich erweiternden, zweiten Teilabschnitt (1.4) aufweist.

8. Verschluss nach Anspruch 6 und 7,
**dadurch gekennzeichnet,**
**dass** der erste Teilabschnitt (1.3), der zweite Teilabschnitt (1.4), der erste Sitzringabschnitt (1.1) und der zweite Sitzringabschnitt (1.2) in dieser Reihenfolge kontinuierlich ineinander übergehend ausgebildet sind.

9. Verschluss nach Anspruch 6 und 7,
**dadurch gekennzeichnet,**
**dass** der Deckel (2) einen sich an die Ringnut (2.1) anschließenden, sich in Richtung des ersten Teilabschnitts (1.3) des Rohrstutzens (2) verjüngenden, zusammen mit dem zweiten Teilabschnitt (1.4) des Rohrstutzens (2) eine vollumfängliche Dichtfläche bildenden Innenabschnitt (2.3) aufweist.

10. Verschluss nach Anspruch 9,
**dadurch gekennzeichnet,**
**dass** der Randabschnitt (2.2), die Ringnut (2.1) und der Innenabschnitt (2.3) in dieser Reihenfolge kontinuierlich ineinander übergehend ausgebildet sind.

11. Verschluss nach einem der Ansprüche 1 bis 10,
**dadurch gekennzeichnet,**
**dass** der Randabschnitt 2.2 von der Ringnut 2.1 abgewandt und jenseits der Dichtfläche einen radial frei auskragenden Teilabschnitt 2.5 aufweist.

## Claims

1. Closure comprising a pipe socket (1) and a cover (2) which fits the pipe socket (1), wherein the pipe socket (1) has at its cover-side end a first seat ring portion (1.1) which extends radially and thereby forms a rounding and a second seat ring portion (1.2) which extends in the pipe socket principal axial direction and adjoins the first, wherein the cover (2) has an annular groove (2.1) which fits the first seat ring section (1.1) and an edge section (2.2) adjoining the annular groove (2.1), wherein the second seat ring portion (1.2) and the edge section (2.2) are configured positively with respect to one another to form a fully circumferential sealing surface and wherein the second seat ring portion (1.2) is configured to expand radially from the first seat ring portion (1.1), **characterized in that** the edge section (2.2) is configured to expand radially from the first seat ring portion (1.1).

2. The closure according to claim 1, **characterized in that** the closure is configured to be free from additional sealant.

3. The closure according to claim 1 or 2, **characterized in that** the first seat ring portion (1.1) and the annular groove (2.1) are configured positively with respect to one another to form a fully circumferential sealing surface.

4. The closure according to any one of claims 1 to 3, **characterized in that** both the rounding of the first seat ring portion (1.1) and also the annular groove (2.1) are configured to be formed along a fixed radius (r).

5. The closure according to claim 4, **characterized in that** the radius (r) for forming the rounding of the first seat ring portion (1.1) or the annular groove (2.1) spans an angle (β) of more than 90°, preferably of more than 150°.

6. The closure according to any one of claims 1 to 5, **characterized in that** the pipe socket (1) has a cylindrically configured first partial section (1.3) in the region between a connecting element (3) on which it is arranged facing away from the cover and the first seat ring portion (1.1).

7. The closure according to any one of claims 1to 6, **characterized in that** the pipe socket (1) has a second partial section (1.4) which expands continuously in the direction of the seat ring portion (1.1), in the region between a connecting element (3) on which it is arranged facing away from the cover and the first seat ring portion (1.1)

8. The closure according to claim 6 and 7, **characterized in that** the first partial section (1.3), the second partial section (1.4), the first seat ring section (1.1) and the second seat ring section (1.2) are configured to go over continuously into one another in this sequence.

9. The closure according to claim 6 and 7, **characterized in that** the cover (2) has an inner section (2.3) which adjoins the annular groove (2.1), which tapers in the direction of the first partial section (1.3) of the pipe socket (1) and which together with the second partial section (1.4) of the pipe socket (1) forms a fully circumferential sealing surface.

10. The closure according to claim 9, **characterized in that** the edge section (2.2), the annular groove (2.1) and the inner section (2.3) are configured to go over continuously into one another in this sequence.

11. The closure according to any one of claims 1 to 10, **characterized in that** the edge section (2.2) has a radially freely projecting partial section (2.5) facing away from the annular groove (2.1) and on the other side of the sealing surface.

## Revendications

1. Fermeture, comprenant un embout tubulaire (1) et un couvercle (2) adapté à l'embout tubulaire (1), dans laquelle l'embout tubulaire (1) à son extrémité du côté du couvercle présente une première portion de bague de siège (1.1) s'élargissant radialement et formant ainsi un arrondi et une deuxième portion de bague de siège (1.2) s'étendant dans la direction axiale principale de l'embout tubulaire et se rattachant à la première portion, dans laquelle le couvercle (2) présente une rainure annulaire (2.1) adaptée à la première portion de bague de siège (1.1) et une portion de bord (2.2) se rattachant à la rainure annulaire (2.1), dans laquelle la deuxième portion de bague de siège (1.2) et la portion de bord (2.2) sont conçues avec des formes complémentaires l'une par rapport à l'autre en formant une surface d'étanchéité intégrale et dans laquelle la deuxième portion de bague de siège (1.2) est conçue afin de s'élargir radialement à partir de la première portion de bague de siège (1.1), **caractérisée en ce que** la portion de bord (2.2) est conçue afin de s'élargir radialement à partir de la première portion de bague de siège (1.1).

2. Fermeture selon la revendication 1, **caractérisée en ce que** la fermeture es conçue de manière exempte de moyen d'étanchéité supplémentaire.

3. Fermeture selon la revendication 1 ou 2, **caractérisée en ce que** la première portion de bague de siège (1.1) et la rainure annulaire (2.1) sont conçues avec des formes complémentaires l'une par rapport à l'autre en formant une surface d'étanchéité intégrale.

4. Fermeture selon une des revendications 1 à 3, **caractérisée en ce que** tant l'arrondi de la première portion de bague de siège (1.1) que la rainure annulaire (2.1) sont conçues en étant formées le long d'un rayon fixe (r).

5. Fermeture selon la revendication 4, **caractérisée en ce que** le rayon (r) pour réaliser l'arrondi de la première portion de bague de siège (1.1), respectivement de la rainure annulaire (2.1) couvre un angle (β) de plus de 90°, de préférence de plus de 150°.

6. Fermeture selon une des revendications 1 à 5, **caractérisée en ce que** l'embout tubulaire (1) présente dans la zone entre un élément de raccordement (3), sur laquelle il est disposé en se détournant du couvercle, et la première portion de bague de siège (1.1) une première portion partielle (1.3), réalisée cylindriquement.

7. Fermeture selon une des revendications 1 à 6, **caractérisée en ce que** l'embout tubulaire (1) présente dans la zone entre un élément de raccordement (3), sur laquelle il est disposé en se détournant du couvercle, et la première portion de bague de siège (1.1) une deuxième portion partielle (1.4) s'élargissant en continu dans la direction de la portion de bague de siège (1.1).

8. Fermeture selon la revendication 6 et 7, **caractérisée en ce que** la première portion partielle (1.3), la deuxième portion partielle (1.4), la première portion de bague de siège (1.1) et la deuxième portion de bague de siège (1.2) sont conçues de manière à passer l'une dans l'autre en continu dans cet ordre.

9. Fermeture selon la revendication 6 et 7, **caractérisée en ce que** la couvercle (2) présente une portion intérieure (2.3) se rattachant à la rainure annuaire (2.1), s'amincissant dans la direction de la première portion partielle (1.3) de l'embout tubulaire (1), formant conjointement à la deuxième portion partielle (1.4) de l'embout tubulaire (1) une surface d'étanchéité intégrale.

10. Fermeture selon la revendication 9, **caractérisée en ce que** la portion de bord (2.2), la rainure annulaire (2.1) et la portion intérieure (2.3) sont conçues de manière à passer l'une dans l'autre en continu dans cet ordre.

11. Fermeture selon une des revendications 1 à 10, **caractérisée en ce que** la portion de bord (2.2) présente une portion partielle (2.5) qui se détourne de la rainure annulaire (2.1) et radialement libre et en porte à faux au-delà de la surface d'étanchéité.
